# EUROPEAN PATENT APPLICATION

(11) **EP 4 130 817 A1**
(43) Date of publication of application: **08.02.2023**
(21) Application number: 21829186.2
(22) Date of filing: 10.02.2021
(51) Int. Cl.: G02B 6/00, G01J 1/02, G01J 1/04, G01N 21/64, G02B 5/00

(54) **LIGHT GUIDE AND LIGHT DETECTION DEVICE**

(30) Priority: 23.06.2020 JP 2020108066
(71) Applicant: Hamamatsu Photonics K.K., Hamamatsu-shi, Shizuoka 435-8558 (JP)
(72) Inventor: MURAMATSU, Hirokazu, Hamamatsu-shi, Shizuoka 435-8558 (JP); SUZUKI, Tomohiko, Hamamatsu-shi, Shizuoka 435-8558 (JP)
(74) Representative: Grünecker Patent- und Rechtsanwälte PartG mbB
(86) International application number: PCT/JP2021/005036
(87) International publication number: WO 2021/261002

(57) **Abstract**

A light guide includes a translucent member. The translucent member includes: a light incident surface where light is incident; a light emitting surface provided on a side of the translucent member opposite to the light incident surface and emitting light; a parabolic first mirror surface facing the light incident surface and reflecting the light incident from the light incident surface as parallel light; and a parabolic second mirror surface facing the first mirror surface and the light emitting surface and reflecting the parallel light reflected by the first mirror surface so as to be condensed toward the light emitting surface.

## Description

### Technical Field

One aspect of the present invention relates to a light guide and a light detection device.

### Background Art

An optical system for fluorescence detection including two parabolic mirrors is known as a light guide-related technology as described in, for example, Patent Literature 1. In the optical system for fluorescence detection described in Patent Literature 1, fluorescence emitted from an object point is reflected by a first parabolic mirror and then condensed at an image point by a second parabolic mirror.

### Citation List

### Patent Literature

Patent Literature 1: Japanese Unexamined Patent Publication No. 2013-160672

### Summary of Invention

### Technical Problem

By the way, in a compact photodetector, the light receiving area thereof is small, and thus it may be conceivable to use a light guide as described above in order to efficiently condense light emitted by an object to be measured on a light receiving surface. However, the light guide as described above is configured by a plurality of components, and thus the light guide tends to be large in size and is not practical from the viewpoint of size reduction.

In this regard, an object of one aspect of the present invention is to provide a light guide and a light detection device that can be reduced in size.

### Solution to Problem

A light guide according to one aspect of the present invention includes a translucent member. The translucent member includes: a light incident surface where light is incident; a light emitting surface provided on a side of the translucent member opposite to the light incident surface and emitting light; a parabolic first mirror surface facing the light incident surface and reflecting the light incident from the light incident surface as parallel light; and a parabolic second mirror surface facing the first mirror surface and the light emitting surface and reflecting the parallel light reflected by the first mirror surface so as to be condensed toward the light emitting surface.

in this light guide, the light incident surface, the light emitting surface, the first mirror surface, and the second mirror surface are formed integrally with the translucent member. Accordingly, it is possible to efficiently condense the light emitted by, for example, an object to be measured on a light receiving surface of a photodetector with a single component. Accordingly, size reduction is possible according to one aspect of the present invention.

In the light guide according to one aspect of the present invention, the light incident surface and the light emitting surface may have a planar shape orthogonal to a first direction and may be separated in the first direction. In this case, by separating the object to be measured positioned on the light incident surface side and the light receiving surface of the photodetector positioned on the light emitting surface side in the first direction, it is possible to suppress the object to be measured having an effect (such as temperature) on the photodetector.

In the light guide according to one aspect of the present invention, the light incident surface and the light emitting surface may be offset in a second direction orthogonal to the first direction. As a result, it is possible to suppress the incident light from the light incident surface being emitted from the light emitting surface as it is without being reflected by the first and second mirror surfaces.

In the light guide according to one aspect of the present invention, the light incident surface and the light emitting surface may be offset so as to be separated in the second direction. As a result, it is possible to further suppress the incident light from the light incident surface being emitted from the light emitting surface as it is without being reflected by the first and second mirror surfaces.

In the light guide according to one aspect of the present invention, the translucent member may include a side surface provided so as to be continuous with the light incident surface and the light emitting surface, and said side surface may have a planar shape along the first direction and the second direction. In this case, the part of the translucent member on the side surface side that does not configure the optical path can be reduced, and the size can be further reduced.

In the light guide according to one aspect of the present invention, the translucent member may include a side surface provided so as to be continuous with the light incident surface and the light emitting surface, and said side surface may be provided with a protrusion. In this case, it is possible to provide a protrusion on the side surface of the translucent member that does not configure the optical path and use this protrusion to fix or align the translucent member.

In the light guide according to one aspect of the present invention, the first mirror surface may be provided so as to be continuous with the light incident surface and the light emitting surface. In the light guide according to one aspect of the present invention, the second mirror surface may be provided so as to be continuous with the light incident surface and the light emitting surface. In these cases, a compact and simple configuration can be realized.

In the light guide according to one aspect of the present invention, an area of the light incident surface other than an effective area for incident light may be light-shielded. As a result, the incidence of extra background light, which becomes background noise, from the light incident surface can be suppressed.

A light detection device according to one aspect of the present invention includes: the light guide described above; and a photodetector detecting light emitted from the light emitting surface of the light guide. Also in this light detection device, since the light guide is provided, the above effects including being size-reducible can be achieved.

### Advantageous Effects of Invention

According to one aspect of the present invention, it is possible to provide a light guide and a light detection device that can be reduced in size.

### Brief Description of Drawings

FIG. 1 is a front view illustrating a light detection device according to one embodiment.
FIG. 2 is a perspective view illustrating a housing of the light detection device in FIG. 1 that is seen through.
FIG. 3 is a perspective view illustrating the photomultiplier tube of FIG. 1.
FIG. 4 is a perspective view illustrating the light guide of FIG. 1.
FIG. 5 is a side view illustrating the light guide of FIG. 1.
FIG. 6 is a perspective view illustrating a light guide according to a modification example.

### Description of Embodiments

Hereinafter, an embodiment will be described in detail with reference to the drawings. In the following description, the same reference numerals are used for the same or corresponding elements with redundant description omitted. The dimensions in the following description do not necessarily correspond to the drawings. The X, Y, and Z directions are based on the illustrated directions and are for convenience.

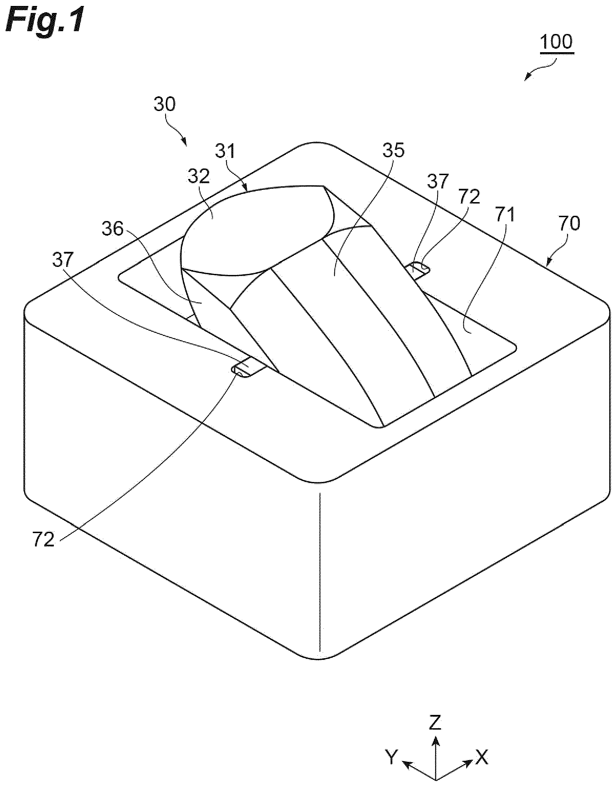

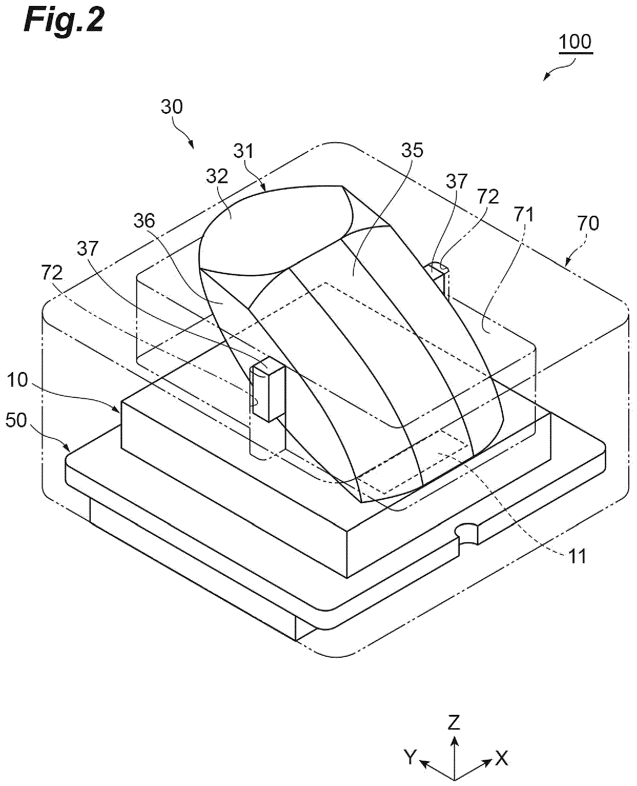

FIG. 1 is a perspective view illustrating a light detection device 100. FIG. 2 is a perspective view illustrating a housing 70 of the light detection device 100 that is seen through. As illustrated in FIGS. 1 and 2, the light detection device 100 is a device detecting the luminescence (microluminescence) of an object to be measured and includes a photomultiplier tube 10, a light guide 30, a substrate 50, and the housing 70. The object to be measured here configures a point light source. For example, the object to be measured is a sample and the luminescence is sample light.

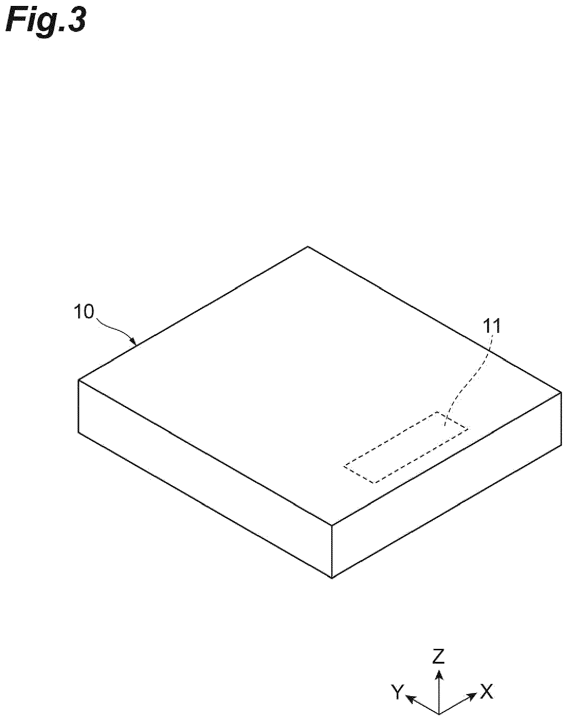

FIG. 3 is a perspective view illustrating the photomultiplier tube 10. As illustrated in FIG. 3, the photomultiplier tube 10 is an ultra-compact photodetector having a transmissive or reflective photoelectric surface (light receiving surface) 11. The photomultiplier tube 10 detects light emitted from a light emitting surface 33 of the light guide 30, which will be described later. The photomultiplier tube 10 is an electron tube in which the direction of light incidence on the photoelectric surface 11 intersects with the direction of electron multiplication in an electron multiplier (not illustrated). The outer shape of the photomultiplier tube 10 is a rectangular flat plate shape in which the Z direction is the thickness direction. The photoelectric surface 11 is disposed on one end side of the photomultiplier tube 10 when viewed in the Z direction and is formed in a rectangular shape. In the photomultiplier tube 10, when light is incident on the photoelectric surface 11, photoelectrons emitted from the photoelectric surface 11 are incident on the electron multiplier, secondary electrons are cascade-amplified from one end side to the other end side of the photomultiplier tube 10, and a signal is taken out of the anode disposed on the other end side of the photomultiplier tube 10.

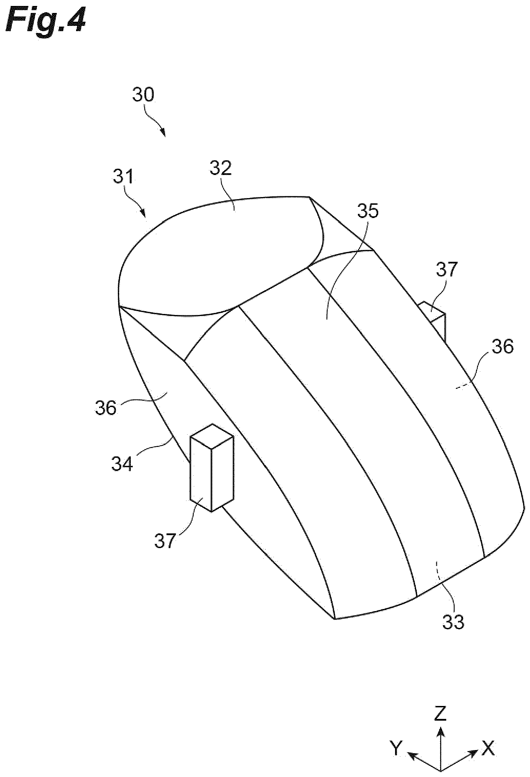

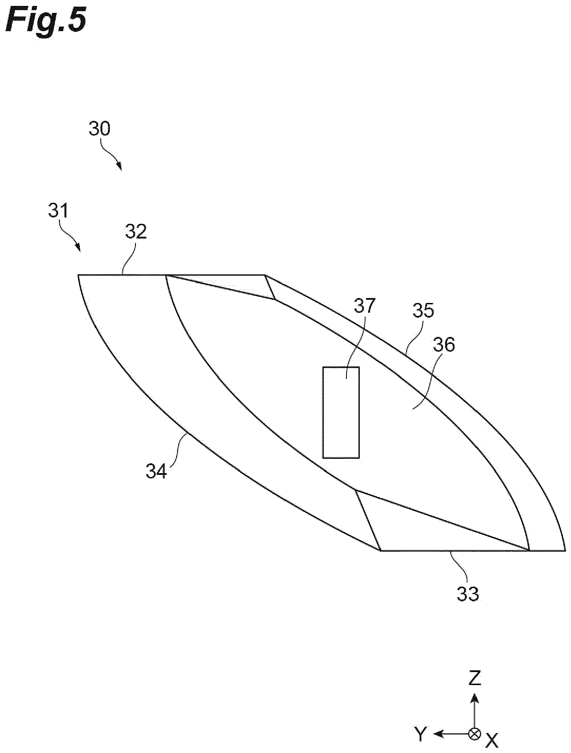

FIG. 4 is a perspective view illustrating the light guide 30. FIG. 5 is a side view illustrating the light guide 30. As illustrated in FIGS. 4 and 5, the light guide 30 is a condensing optical element condensing the luminescence of the object to be measured onto the photomultiplier tube 10 (photoelectric surface 11). The light guide 30 includes a block-shaped translucent member 31 formed of a translucent material. The translucent member 31 is formed of, for example, glass such as optical glass or resin such as optical plastic. The translucent member 31 integrally includes a light incident surface 32, the light emitting surface 33, a first mirror surface 34, a second mirror surface 35, and side surfaces 36.

The light incident surface 32 is a surface on which light is incident. The light emitting surface 33 is a surface from which light is emitted. The light emitting surface 33 is provided on the side of the translucent member 31 opposite to the light incident surface 32. The light incident surface 32 and the light emitting surface 33 configure the outer surface of the translucent member 31. The light incident surface 32 and the light emitting surface 33 are planar and parallel to each other. In other words, the light incident surface 32 and the light emitting surface 33 have planar shapes orthogonal to the Z direction (first direction). The light incident surface 32 and the light emitting surface 33 are separated in the Z direction.

The light incident surface 32 and the light emitting surface 33 are offset in the Y direction (second direction) orthogonal to the Z direction. Here, the light incident surface 32 and the light emitting surface 33 are offset so as to be separated in the Y direction. In other words, the light incident surface 32 and the light emitting surface 33 are disposed so as not to overlap each other when viewed in the Z direction. The light incident surface 32 and the light emitting surface 33 are curved such that the edges thereof on one side and the other side in the Y direction bulge outward.

The first mirror surface 34 is a parabolic reflective surface facing the light incident surface 32 and reflecting the light incident from the light incident surface 32 as parallel light. The first mirror surface 34 is provided so as to be continuous with the light incident surface 32 and the light emitting surface 33. The first mirror surface 34 is configured such that the object to be measured is positioned at the focal point thereof. The first mirror surface 34 has a substantially circular arc shape bulging outward when viewed in the Z direction and has a substantially circular arc shape bulging outward when viewed in the X direction (third direction) orthogonal to both the Y direction and the Z direction. The first mirror surface 34 configures the outer surface of the translucent member 31. The first mirror surface 34 can be formed by various known techniques. The first mirror surface 34 functions as a parabolic mirror.

The second mirror surface 35 is a parabolic reflective surface facing the first mirror surface 34 and the light emitting surface 33 and reflecting the parallel light reflected by the first mirror surface 34 so as to be condensed toward the light emitting surface 33. The second mirror surface 35 is provided so as to be continuous with the light incident surface 32 and the light emitting surface 33. The second mirror surface 35 is configured such that the photoelectric surface 11 of the photomultiplier tube 10 is positioned at the focal point thereof. The second mirror surface 35 has a substantially circular arc shape bulging outward when viewed in the Z direction and has a substantially circular arc shape bulging outward when viewed in the X direction. The second mirror surface 35 configures the outer surface of the translucent member 31. The second mirror surface 35 can be formed by various known techniques. The second mirror surface 35 functions as a parabolic mirror.

The side surface 36 is a surface provided so as to be continuous with the light incident surface 32, the light emitting surface 33, the first mirror surface 34, and the second mirror surface 35. The side surface 36 configures the outer surface of the translucent member 31. The side surfaces 36 have a planar shape along both the Y direction and the Z direction, and the pair of side surfaces 36 are provided so as to face each other in the X direction. Flanges 37 are respectively provided on the pair of side surfaces 36. The flange 37 is a protrusion for alignment and fixing extending in the Z direction.

The light guide 30 as described above is installed on the photomultiplier tube 10 such that the light emitting surface 33 is disposed on the photoelectric surface 11. At this time, the light guide 30 fits in the photomultiplier tube 10 when viewed in the Z direction. The light emitting surface 33 abuts against the photomultiplier tube 10. The light incident surface 32 of the light guide 30 is disposed on the anode side of the photomultiplier tube 10. The photomultiplier tube 10 and the light guide 30 as described above configure a light receiving unit.

The outer shape of the substrate 50 is a rectangular flat plate shape in which the Z direction is the thickness direction. The photomultiplier tube 10 is mounted on the substrate 50 so as to overlap the substrate 50. The substrate 50 is a circuit board electrically connected to the photomultiplier tube 10 and, for example, supplying electric power to the photomultiplier tube 10 or outputting a signal from the photomultiplier tube 10. An input/output connector and a pin may be connected to the substrate 50.

The photomultiplier tube 10 and the substrate 50 are accommodated in the housing 70. A rectangular hole 71 that opens at least on one side in the Z direction is formed in the housing 70. The rectangular hole 71 has an internal space corresponding to the size of the translucent member 31. The light guide 30 is disposed in the rectangular hole 71. Grooves 72 extending in the Z direction are respectively formed in the inner surfaces of the rectangular hole 71 facing each other in the X direction. The groove 72 is a recess into which the flange 37 of the translucent member 31 fits (engages) and has a groove width corresponding to the width of the flange 37. By fitting the flange 37 into the groove 72, the translucent member 31 in the rectangular hole 71 can be fixed while being aligned.

In the light detection device 100 configured as described above, light emitted from the object to be measured is incident on the light incident surface 32 of the translucent member 31 in the light guide 30. In the translucent member 31, the incident light is reflected by the first mirror surface 34 so as to become parallel light and then reflected toward the light emitting surface 33 so as to be condensed by the second mirror surface 35. The light is emitted from the light emitting surface 33 as emitted light. Then, the emitted light is condensed on the photoelectric surface 11 of the photomultiplier tube 10.

Here, in the light guide 30, the light incident surface 32, the light emitting surface 33, the first mirror surface 34, and the second mirror surface 35 are formed integrally with the translucent member 31. Accordingly, it is possible to efficiently condense the light emitted by the object to be measured on the photoelectric surface 11 of the photomultiplier tube 10 with a single component. Accordingly, size reduction is possible according to the light guide 30. In addition, optical axis alignment is unnecessary unlike in a general light guide configured by a plurality of components. Joining to the photomultiplier tube 10 can be facilitated, and simplification can be achieved in terms of device configuration. Accordingly, a compact and inexpensive optical system and device configuration are possible.

In the light guide 30, the light incident surface 32 and the light emitting surface 33 have a planar shape orthogonal to the Z direction and are separated in the Z direction. In this case, by separating the object to be measured positioned on the light incident surface 32 side and the photoelectric surface 11 positioned on the light emitting surface 33 side in the Z direction, it is possible to suppress the object to be measured having an effect (such as temperature) on the photomultiplier tube 10 (photoelectric surface 11 in particular).

In the light guide 30, the light incident surface 32 and the light emitting surface 33 are offset in the Y direction. As a result, it is possible to suppress the incident light from the light incident surface 32 being emitted from the light emitting surface 33 as it is without being reflected by the first mirror surface 34 and the second mirror surface 35.

In the light guide 30, the light incident surface 32 and the light emitting surface 33 are offset so as to be separated in the Y direction. As a result, it is possible to further suppress the incident light from the light incident surface 32 being emitted from the light emitting surface 33 as it is without being reflected by the first mirror surface 34 and the second mirror surface 35. By offsetting the light incident surface 32 and the light emitting surface 33 in this manner, the incident light from the object to be measured (point light source) at the focal point of the first mirror surface 34 can be turned into parallel light by the first mirror surface 34 and condensed on the photoelectric surface 11 by the second mirror surface 35 and, at the same time, it is possible to suppress the other background light being condensed on the photoelectric surface 11.

In the light guide 30, the translucent member 31 includes the side surfaces 36 provided so as to be continuous with the light incident surface 32 and the light emitting surface 33. The side surface 36 has a planar shape along the Y direction and the Z direction. In this case, the part of the translucent member 31 on the side surface 36 side that does not configure the optical path can be configured as if it were cut and can be reduced. Accordingly, the size can be further reduced.

In the light guide 30, the flange 37 is provided on the side surface 36. In this case, it is possible to fix and align the translucent member 31 using the flange 37. It should be noted that the flange 37 as described above may be used only for fixing or may be used only for alignment.

In the light guide 30, the first mirror surface 34 is provided so as to be continuous with the light incident surface 32 and the light emitting surface 33. In the light guide 30, the second mirror surface 35 is provided so as to be continuous with the light incident surface 32 and the light emitting surface 33. In this case, a compact and simple configuration can be realized.

The light detection device 100 includes the light guide 30 and the photomultiplier tube 10 detecting light emitted from the light emitting surface 33 of the light guide 30. Also in the light detection device 100, since the light guide 30 is provided, the above effects including being size-reducible can be achieved.

It should be noted that in a case where the temperature of the object to be measured is adjusted, the photomultiplier tube 10 is less likely to be affected by the temperature of the object to be measured when the distance between the light incident surface 32 and the light emitting surface 33 in the Z direction (hereinafter, also simply referred to as "Z-direction distance") is larger. In this case, there is a merit that an increase in dark count can be suppressed in the photomultiplier tube 10. Meanwhile, if the Z-direction distance is increased without using an optical component (if the object to be measured and the photomultiplier tube 10 are simply made farther from each other in the Z direction), the light receiving efficiency may deteriorate and it may be impossible to obtain the output required by the photomultiplier tube 10. On the other hand, using a condensing optical system such as a lens may excessively increase the Z-direction distance to result in an increase in device size. In this regard, in the present embodiment, it is possible to enjoy the above merit while avoiding such possibilities.

In the light guide 30, the light incident surface 32 and the light emitting surface 33 are offset just such that the translucent member 31 does not protrude from the photomultiplier tube 10 in a case where the translucent member 31 is installed on the photomultiplier tube 10. As a result, it is possible to realize a compact light receiving unit in which the translucent member 31 is installed on the photomultiplier tube 10. In addition, since the light incident surface 32 and the light emitting surface 33 are offset, even if the incident light to the light incident surface 32 may deviate from the light incident surface 32 or may become background light that becomes noise due to, for example, reflection and scattering on the surface of the light incident surface 32, the possibility of the background light being incident on the photoelectric surface 11 of the photomultiplier tube 10 can be reduced.

In the light guide 30, the light receiving efficiency can be improved in the case of comparison at the same thickness with the configuration of the related art in which the luminescence an object to be measured is guided to the photoelectric surface 11 by a lens and a mirror. In the light guide 30, the incidence of background light that becomes noise can be reduced by joining the translucent member 31 to the photoelectric surface 11 of the photomultiplier tube 10.

Although an embodiment has been described above, one aspect of the present invention is not limited to the above embodiment.

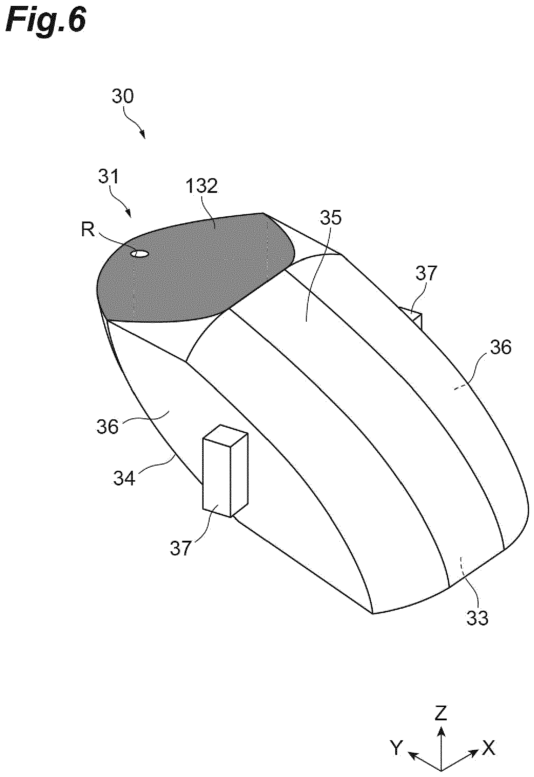

FIG. 6 is a perspective view illustrating the light guide 30 according to a modification example. As illustrated in FIG. 6, the translucent member 31 may include a light incident surface 132 instead of the light incident surface 32 (see FIG. 4). The light incident surface 132 is shielded from light other than an effective area R for incident light and, for example, is painted black and/or has a light shielding film formed thereon. The effective area R is an area where light can be incident on the light incident surface 132 and, for example, an area preset from the positional relationship with an object to be measured. As a result, the incidence of extra background light, which becomes background noise, from the light incident surface 132 can be suppressed. It should be noted that the black color may be blacker than the color of the effective area R. Being painted in black may not be a complete filling or may be uneven, and it suffices that the area of the light incident surface 132 other than the effective area R has a black part. The black application can be performed using various known techniques. It should be noted that even in a case where a light shielding film is formed, the light shielding properties are similar to those of the black color.

Although the flange 37 is provided as a protrusion on the side surface 36 in the above embodiment and modification example, the protrusion is not limited to the flange 37 and an outer frame may be provided instead of or in addition to the flange 37. Although the first mirror surface 34 in the above embodiment and modification example is configured such that the object to be measured is positioned at the focal point of the first mirror surface 34, alternatively, the translucent member 31 may be disposed such that the object to be measured is positioned at the focal point of the first mirror surface 34.

Various materials and shapes can be applied to each configuration in the above embodiment and modification example without being limited to the materials and shapes described above. Each configuration in the above embodiment or modification example can be applied in any manner to each configuration in another embodiment or modification example. A part of each configuration in the above embodiment or modification example can be appropriately omitted without departing from the gist of one aspect of the present invention.

### Reference Signs List

10: photomultiplier tube (photodetector), 30: light guide, 31: translucent member, 32, 132: light incident surface, 33: light emitting surface, 34: first mirror surface, 35: second mirror surface, 36: side surface, 37: flange (protrusion), 100: light detection device, R: effective area.

## Claims

1. A light guide comprising a translucent member,
wherein the translucent member includes:
a light incident surface where light is incident;
a light emitting surface provided on a side of the translucent member opposite to the light incident surface and emitting light;
a parabolic first mirror surface facing the light incident surface and reflecting the light incident from the light incident surface as parallel light; and
a parabolic second mirror surface facing the first mirror surface and the light emitting surface and reflecting the parallel light reflected by the first mirror surface so as to be condensed toward the light emitting surface.

2. The light guide according to claim 1, wherein the light incident surface and the light emitting surface have a planar shape orthogonal to a first direction and are separated in the first direction.

3. The light guide according to claim 2, wherein the light incident surface and the light emitting surface are offset in a second direction orthogonal to the first direction.

4. The light guide according to claim 3, wherein the light incident surface and the light emitting surface are offset so as to be separated in the second direction.

5. The light guide according to claim 3 or 4, wherein
the translucent member includes a side surface provided so as to be continuous with the light incident surface and the light emitting surface, and
said side surface has a planar shape along the first direction and the second direction.

6. The light guide according to any one of claims 1 to 5, wherein
the translucent member includes a side surface provided so as to be continuous with the light incident surface and the light emitting surface, and
said side surface is provided with a protrusion.

7. The light guide according to any one of claims 1 to 6, wherein the first mirror surface is provided so as to be continuous with the light incident surface and the light emitting surface.

8. The light guide according to any one of claims 1 to 7, wherein the second mirror surface is provided so as to be continuous with the light incident surface and the light emitting surface.

9. The light guide according to any one of claims 1 to 8, wherein an area of the light incident surface other than an effective area for incident light is light-shielded.

10. A light detection device comprising:
the light guide according to any one of claims 1 to 9; and
a photodetector detecting light emitted from the light emitting surface of the light guide.
